# EUROPEAN PATENT APPLICATION

(11) **EP 1 689 061 A1**
(43) Date of publication of application: **09.08.2006**
(21) Application number: 05002197.1
(22) Date of filing: 02.02.2005
(51) Int. Cl.: H02J 7/00

(54) **Compact, portable battery charger with USB- Connector**

(71) Applicant: Yang, Fu-I, Taoyuan City, Taiwan R.O.C. (TW)
(72) Inventor: Yang, Fu-I, Taoyuan City, Taiwan R.O.C. (TW)
(74) Representative: Casalonga, Axel

(57) **Abstract**

A portable battery charger in shape of thumb having a USB connector mounted on a circuit board for controlling the charging process. The circuit board includes a charging terminal unit consisting of a positive and a negative terminal. A housing is adapted to cover the circuit board and fix the USB connector in place. A charging chamber is formed in the housing for receiving one or two charging batteries. The USB connector, the circuit board and the charging chamber are joined together to form a strip-shaped body in a linear axial (x-x) direction, thereby facilitating the carrying and the connection to an electronic product with USB connector.

## Description

### BACKGROUND OF THE INVENTION

### 1. Field of the Invention

The present invention relates to a battery charger with a USB connector, and more particularly to the battery charger whose USB connector and circuit board are joined together in axial direction to form a whole body to be received within a housing. Meanwhile, the charging chamber for receiving the charging batteries and the housing are joined together in a linear and axial direction to form a slim and elongated portable charger.

### 2. Description of the Prior Art

With the popularity of the portable electronic products such as digital cameras, MP3, PDA, etc., the demand of the secondary batteries increases in an amazing speed. The use of the electronic products using secondary batteries often encounters a problem that the batteries are fully consumed and no power supply is available for charging.

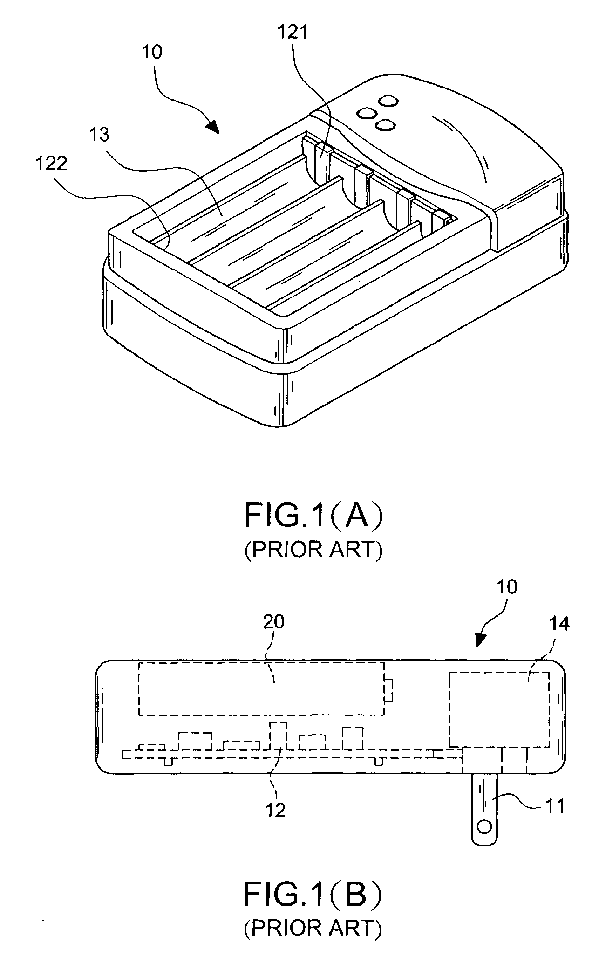

As shown in FIGS. 1A and 1B, a conventional charger 10 includes a plug 11 insertable into a mains socket. A plurality of electronic charging elements 12 is received within the charger 10. A positive and a negative terminal 121, 122 project from the front and the rear wall of a charging chamber 13 for charging the charging batteries 20.

Since the charger 10 is connected to the mains socket via the plug 11, an AC-DC converter 14 has to be installed within the charger 10. Thus, the direct current produced can be delivered from the AC-DC converter 14 to the electronic elements 12. In this way, the AC-DC converter 14 occupies almost the whole front portion of the charger 10 while the electronic elements 12 are positioned under the charging chamber 13. So, the physical size of the whole structure of the charger 10 is not easily reduced, thereby causing inconvenience in carrying when going for an outing. Moreover, the current required for the charging process has to be delivered from the mains socket via the plug 11, and it's difficult to find a mains socket outdoors.

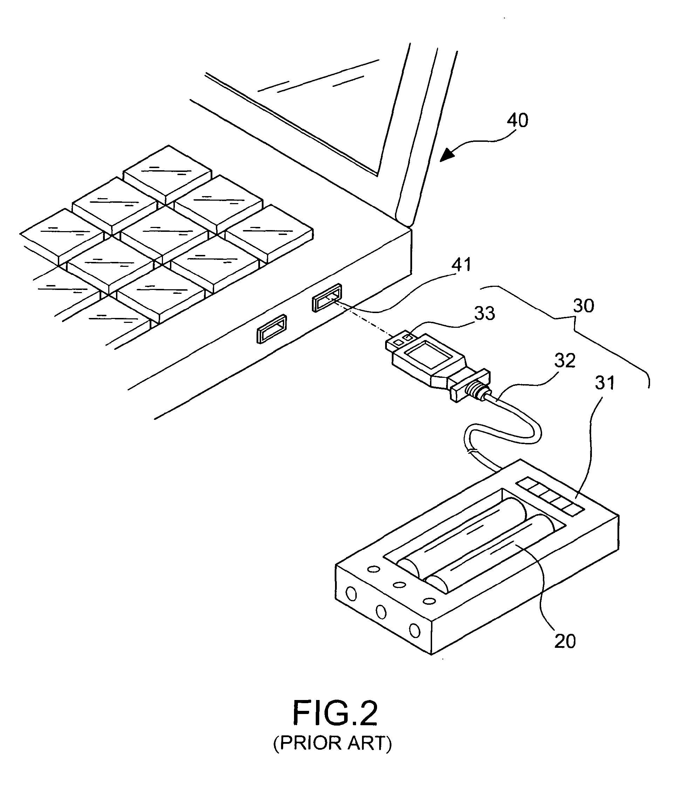

As shown in FIG. 2, a conventional USB charger 30 includes a main body 31 from which a power cord 32 and a USB connector 33 are extended. The USB connector 33 can be inserted into an electronic product 40 like Notebook with a USB connector 41 when going on an outing. In this way, the charging batteries 20 within the main body 31 can be charged. Unlike the AC charger 10 shown in FIGS. 1A and 1B, this design enjoys an advantage of direct charging process with direct current. However, the internal structure of USB charger 30 is identical with that of the charger 10 in FIGS. 1A and 1B, and the only difference lies in that the USB charger 30 employs the power cord 32 and the USB connector 33. Accordingly, the USB charger 30 still has a too large physical size and the power cord 32, thereby making the use difficult and inconvenient as well.

With the development of the portable electronic products like MP3 or PDA, the physical size thereof has been more and more reduced. Meanwhile, many use only a battery in AA or AAA size for supplying the required power. Accordingly, the charger for secondary batteries should be correspondingly miniaturised and made more compact. Besides, the plug interface must easily gain the direct current to meet customer's specifications. These are main topics in which the invention is involved.

### SUMMARY OF THE INVENTION

It is a primary object of the invention to provide a battery charger whose USB connector, circuit board and charging chamber are joined together in an axial direction to form a slim and compact body as a thumb, thereby facilitating the carrying and the connection to the available electronic products with USB connector for a charging process.

In order to achieve the above-mentioned object, the battery charger in accordance with the invention comprising:
a) a USB connector connectable to a USB port for gaining the direct current from the USB port;
b) a circuit board for controlling the charging process, the circuit board having a front end for fixing connection legs of the USB connector in place to establish the electrical connection;
c) at least one charging terminal unit consisting of a positive and a negative terminal both of which are fixed in the opposite positions of the charging terminal unit, respectively; and
d) a housing adapted to cover the circuit board and fix the USB connector in place, a charging chamber being formed at the top of the housing, the positive and the negative terminal of the charging terminal unit projecting from the front and the rear end of the charging chamber, respectively;
   wherein the USB connector, the circuit board, and the charging chamber are arranged in a linear and axial direction (X-X) and joined together to form a strip-shaped body.

According to the aforementioned feature, the charging terminal unit may be arranged side by side at the same rear end of the circuit board. Moreover, an electric connection piece is provided for establishing the electric connection between two charging batteries arranged side-by-side in opposite directions, thereby forming a charging circuit.

In addition, the housing includes a charging chamber for receiving two charging batteries. The charging terminal unit is disposed at the front end of the charging chamber while a cap pivotally attached to the rear end of the charging chamber. An electric connection piece is provided at the inner side of the cap for establishing the electric connection between two charging batteries arranged side-by-side in opposite directions, thereby forming a charging circuit.

Furthermore, the housing consists of a front and a rear housing. The rear housing is used as a charging chamber for receiving one or two charging batteries. An electric connection piece provided at the inner side of rear end of the rear housing establishes a charging circuit when the front and the rear housing are joined together.

### BRIEF DESCRIPTION OF THE DRAWINGS

The accomplishment of this and other objects of the invention will become apparent from the following descriptions and its accompanying drawings of which:
FIG. 1A is a perspective view of a conventional AC charger;
FIG. 1B is a side view of the conventional AC charger of FIG. 1A;
FIG. 2 is a perspective view of a conventional USB charger;
FIG. 3 is a block diagram of the main structure of the invention;
FIG. 4A is a cutaway view of a first embodiment of the invention;
FIG. 4B is a cross-sectional view taken along the line 4B-4B of FIG. 4A;
FIG. 4C is a cutaway view of a second embodiment of the invention;
FIG. 5 is a cutaway view of a third embodiment of the invention;
FIG. 6A is a cutaway view of a fourth embodiment of the invention;
FIG. 6B is a cross-sectional view taken along the line 6B-6B of FIG. 6A;
FIG. 7A is a perspective exploded view of a fifth embodiment of the invention;
FIG. 7B is a cutaway view of the fifth embodiment of the invention;
FIG. 7C is a cross-sectional view taken along the line 7C-7C of FIG. 7B;
FIG. 8A is a cutaway view of a sixth embodiment of the invention before assembly;
FIG. 8B is a cutaway view of the sixth embodiment of the invention after assembly;
FIG. 9 is a cutaway view of a seventh embodiment of the invention;
FIG. 10 is an exploded view of the seventh embodiment of the invention with a top cover;
FIG. 11 is an assembly view of FIG. 10; and
FIG. 12 is a perspective view of an application of the invention.

### DETAILED DESCRIPTION OF THE PREFERRED EMBODIMENT

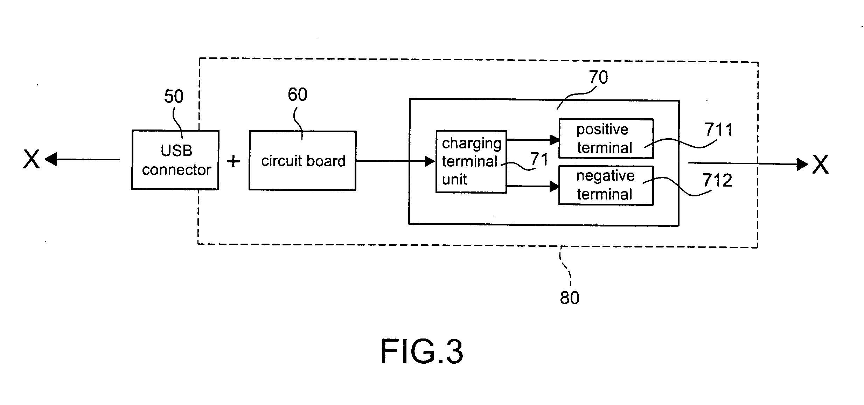

First of all, referring to FIG. 3, a block diagram of the main structure of the invention is shown. A universal serial bus (USB) connector 50 is connected to one end of a circuit board 60 with the function of controlling the charging process. A charging terminal unit 71 consisting of a positive and a negative terminal 711, 712 is fitted to the other end of the circuit board 60. A housing 80 is adapted to cover the circuit board 60 and fix the USB connector 50. The housing 80 contains a charging chamber 70 for receiving one or two charging batteries. The USB connector 50, the circuit board 60, and the charging chamber 70 are arranged in a linear and axial direction (X-X) and joined together to form a strip-shaped body.

Based upon the above-mentioned structure, the battery charger in accordance with the invention is formed in a slim and elongated body for convenient carrying. Meanwhile, it can be plugged into an electronic product with USB port. Therefore, it's very practical in use.

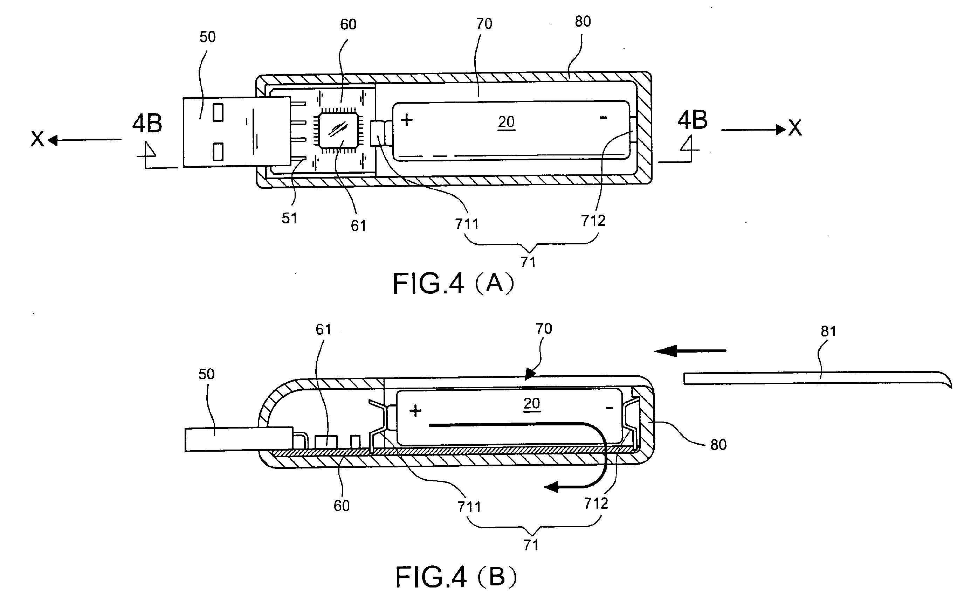

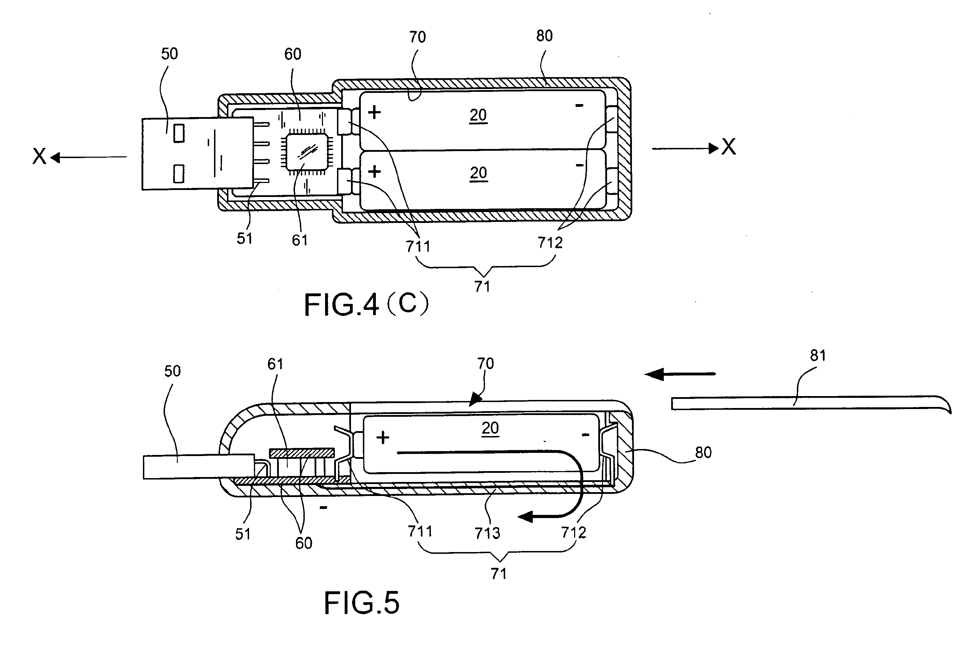

As shown in FIGS. 4A and 4B, the battery charger with a USB connector comprises a USB connector 50, a circuit board 60 for controlling the charging process, a charging terminal unit 71, and a housing 80:
The USB connector 50 is connectable to a USB port (not shown) for gaining the direct current from the USB port;
The circuit board 60 has a front end for fixing connection legs 51 of the USB connector 50 in place to establish an electrical connection. According to the preferred embodiment, electronic components 61 on the circuit board 60 are gathered at a place near the USB connector 50.

The charging terminal unit 71 consists of a positive and a negative terminal 711, 712 both of which are soldered on the circuit board 60 to form a space for receiving and charging the batteries. Since the main electronic components 61 are gathered at the front end of the circuit board 60, the rear section of the circuit board 60 has only circuits and is formed in a thin plate without occupying much space.

The housing 80 is adapted to cover the circuit board 60 and fix the USB connector 50 in place. Meanwhile, a charging chamber 70 is formed at the top of the housing 80. Accordingly, the positive and the negative terminal 711, 712 of the charging terminal unit 71 project from the front and the rear end of the charging chamber 70, respectively.

When a NiH or NiCd battery 20 is placed into the charging chamber 70, the electrical connection is established between the positive and the negative terminal 711, 712, thereby forming a charging loop shown by an arrow in bold type in FIG. 4B. The electronic components 61 on the circuit board 60 and the charging circuit belong to the prior art so that no further descriptions thereto are given hereinafter.

As shown in FIG. 4c, the battery charger in accordance with a second embodiment of the invention has a circuit board 60 with two charging terminal units 71 for charging two NiH or NiCd batteries 20 in side-by-side arrangement. If the NiH or NiCd batteries 20 are shaped in AAA size having a diameter of 10 mm and a length of 44.5 mm, the width of two side-by-side batteries will not exceed the limit of the charging chamber 70. Thus, it's also very convenient in carrying.

As shown in FIG. 5, the battery charger in accordance with a third embodiment of the invention has a circuit board 60 made in shortened and multilayer type. The circuit board 60 together with the electronic components 61 is fitted to the front end of the charging chamber 70. The negative terminal 712 of the charging terminal unit 71 is connected to the circuit board 60 via a lead 713 to establish a charging loop.

The charging chamber 70 in accordance with the first, the second, and the third embodiment of the invention is disposed at the top of the housing 80. If necessary, a sliding cover 81 may be optionally provided to close the charging chamber 70 (see FIG. 4B).

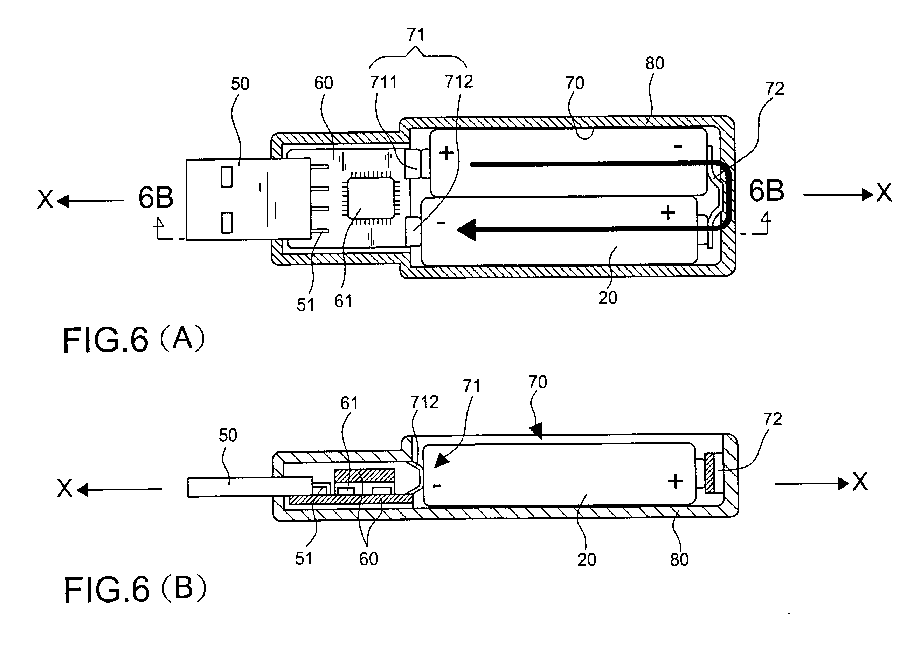

FIGS. 6A and 6B illustrate a fourth embodiment that is substantially identical to the aforementioned embodiments. However, the difference lies in that the positive and the negative terminal 711, 712 of the charging terminal unit 71 are arranged side by side on the rear end of the circuit board 60. This design allows a reduction of the thickness of the charging chamber 70; however, it is necessary to fit an electric connection piece 72 to the rear end of the charging chamber 70. The electric connection piece 72 can be constructed as a flexible metal bridge. In addition, both NiH or NiCd batteries 20 have to be placed side by side in opposite direction within the charging chamber 70 for creating a charging loop shown by the boldfaced line in FIG. 6A.

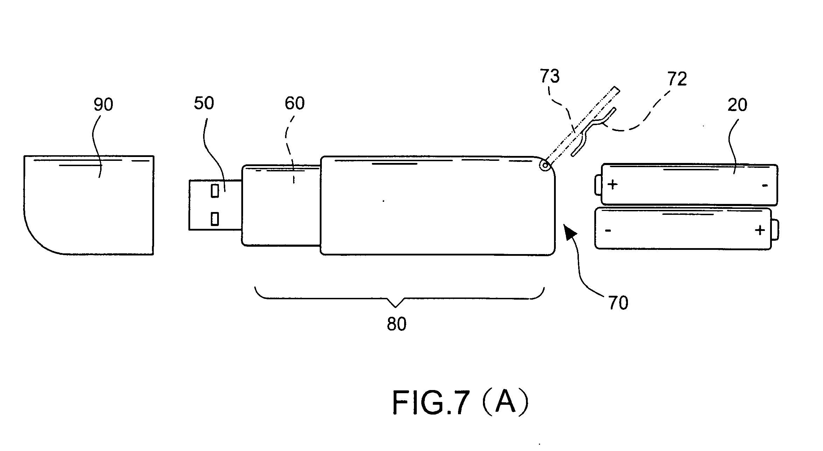

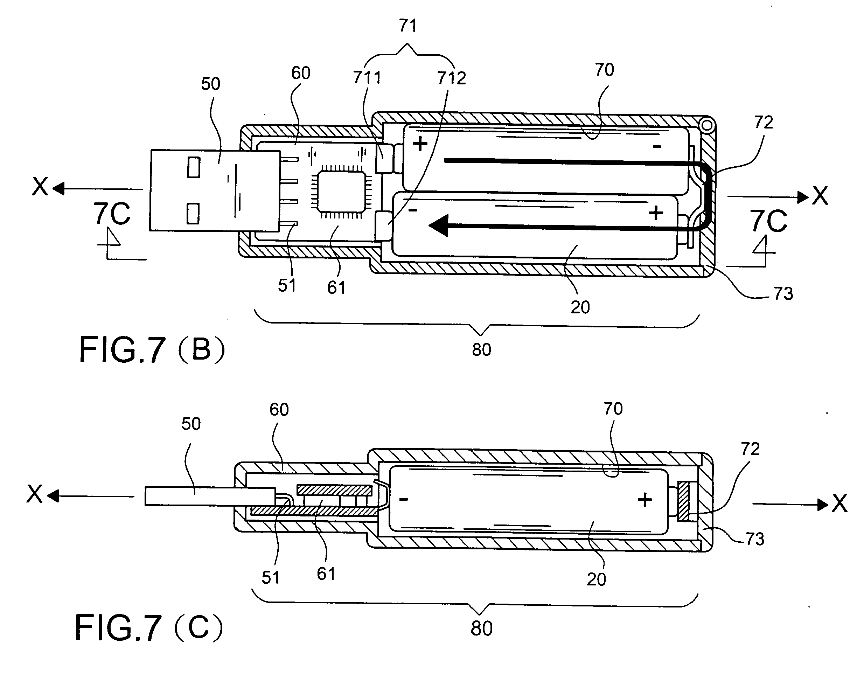

FIGS. 7A, 7B and 7C illustrate a fifth embodiment that is substantially identical to the embodiment shown in FIGS 6A and 6B. However, the difference lies in that the opening of the charging chamber 70 is positioned at the rear end thereof for the insertion of the charging batteries 20. Meanwhile, the electric connection piece 72 is positioned at the internal side of a cap 73. When the opening is closed by the cap 73, the charging loop between the charging batteries 20 is created by the electric connection piece 72. The pivotal or slidable arrangement of the cap 73 on the housing 80 has been widely applied to the conventional electronic products so that no further descriptions thereto are given hereinafter.

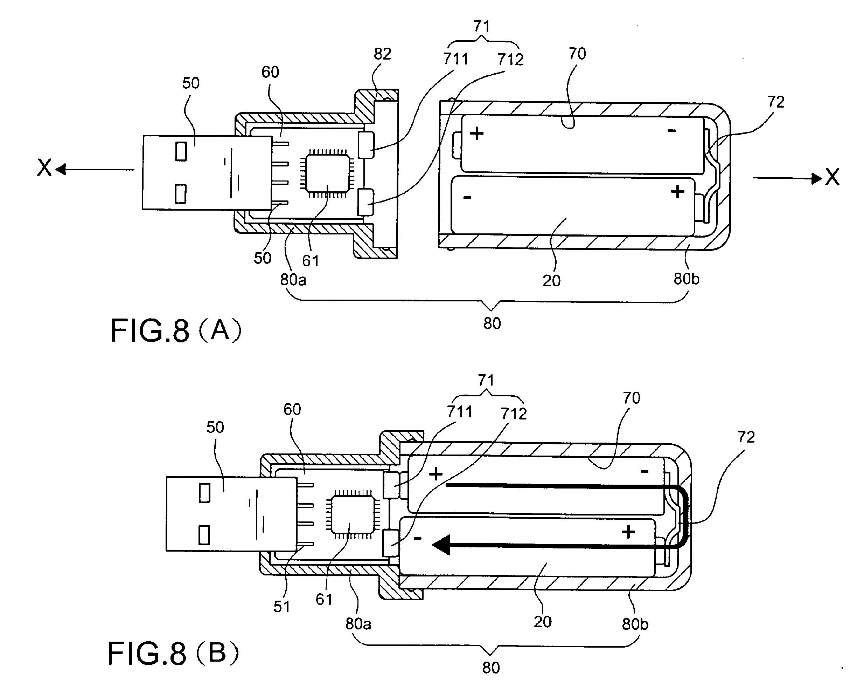

FIGS. 8A and 8B illustrate a sixth embodiment that is substantially identical to the aforementioned embodiments. However, the difference lies in that the housing 80 is divided into a front housing 80a and a rear housing 80b. The front housing 80a is adapted to cover the circuit board 60 and fix the USB connector 50 in place. A mounting portion 82 is positioned at the rear end of the front housing 80a. The rear housing 80b has a closed rear end and an open front end to form an axial charging chamber 70. The front end of the rear housing 80b fits into the mounting portion 82 of the front housing 80a while the rear end thereof is fitted with the electric connection piece 72 to establish the electrical connection between the charging batteries 20. So, a charging loop is created within the charging chamber 70 when the front housing 80a and the rear housing 80b are joined together to form the whole housing 80.

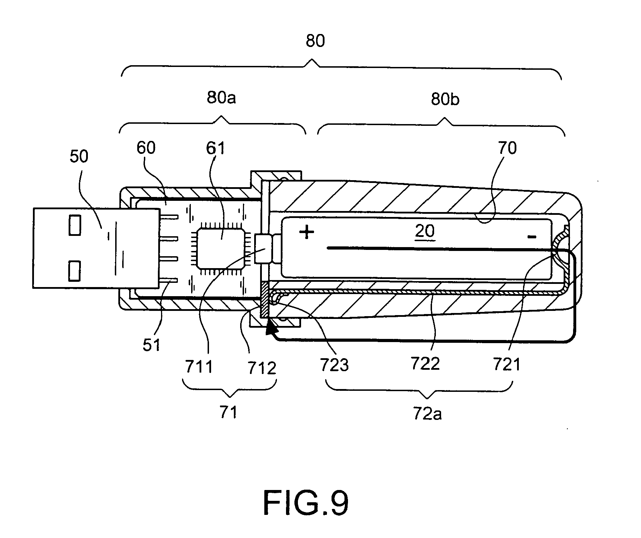

FIG. 9 illustrates a seventh embodiment that is substantially identical to the sixth embodiment. However, the difference lies in that only one charging battery 20 can be received within the rear housing 80b as the charging chamber 70. Therefore, the electric connection piece 72a includes a contact portion 721 at the internal side of the rear end of the rear housing 80b and a conductive portion 722 extending from the contact portion 721 to the opening of the rear housing 80b. The conductive portion 722 includes a free end 723 in contact with the negative terminal 712 when the front housing 80a and the rear housing 80b are joined together to form the whole housing 80. In this way, the charging current flows from the positive terminal 711 through the charging battery 20 and the electric connection piece 72a back to the negative terminal 712, thereby creating a continuous charging loop.

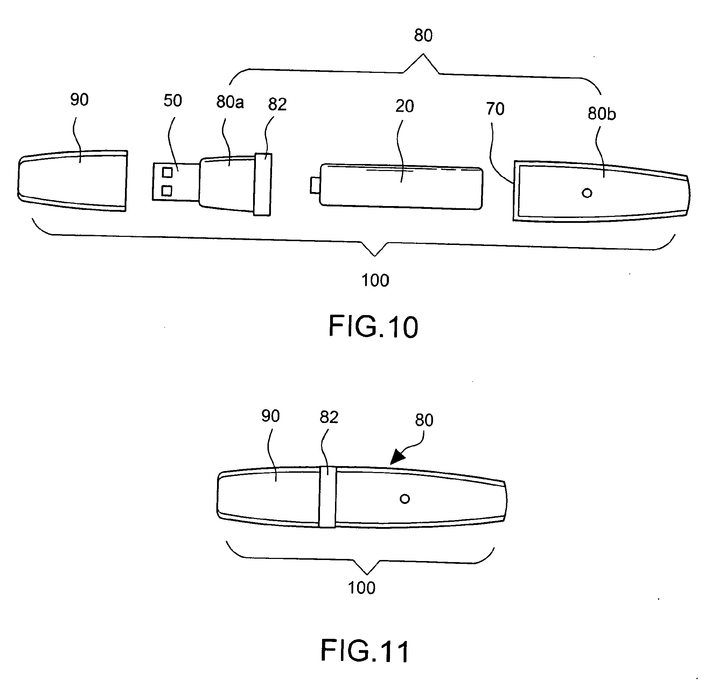

As shown in FIG. 10, the charging battery 20 can be removed from or placed into the charging chamber 70 when the front housing 80a and the rear housing 80b are separated from each other. It's very practical in use. As shown in FIG. 11, a top cover 90 is mounted on the front housing 80a of the charger 100. When the charger 100 is adapted to receive only one battery in AAA or AA size, the physical size thereof is almost the same to the one shown in FIG. 11. Accordingly, the charger 100 is constructed as a charging pen that is very convenient and practical in carrying.

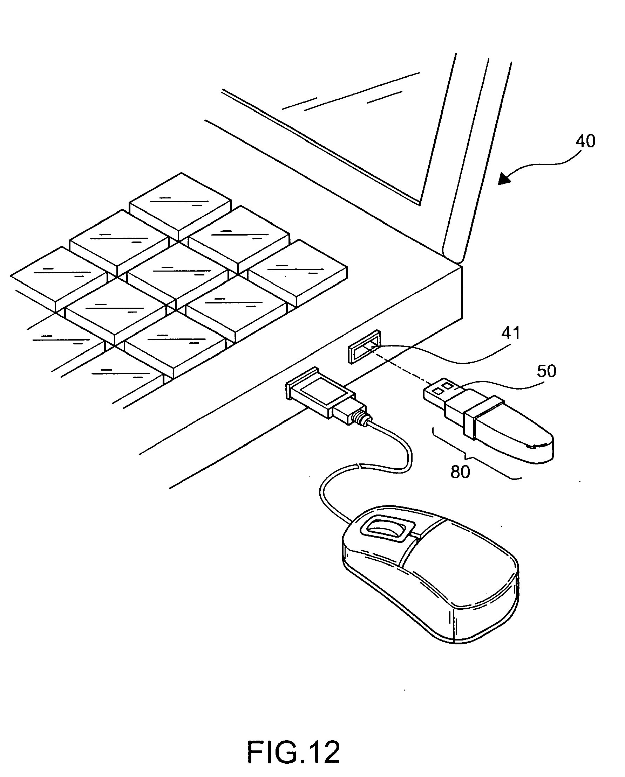

FIG. 12 illustrates that the top cover 90 shown in FIG. 11 is removed from the charger 100 for insertion into a USB port 41. In this way, the direct current is easily available. Meanwhile, the use of the USB port 41 doesn't affect the use of the other USB port for mouse connection. Thus, it's very practical in use. In addition, USB ports are available in many electronic products so that to obtain the direct current is very easy and convenient.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. A portable battery charger in shape of thumb, comprising:
a) a USB connector (50) connectable to a USB port for gaining the direct current from the USB port;
b) a circuit board (60) for controlling the charging process, the circuit board having a front end for fixing connection legs (51)of the USB connector (50) in place to establish an electrical connection;
c) at least one charging terminal unit (71) consisting of a positive and a negative terminal (711) - (712) both of which are fixed in the opposite positions of the charging terminal unit (71), respectively; and
d) a housing (80) adapted to cover the circuit board (60) and fix the USB connector (50) in place, a charging chamber (70) being formed at the top of the housing (80), the positive and the negative terminal (711) - (712) of the charging terminal unit (71) projecting from the front and the rear end of the charging chamber, respectively;
wherein the USB connector (50), the circuit board (60), and the charging chamber (70) are arranged in a linear and axial direction (X-X) and joined together to form a strip-shaped body.

2. The battery charger with a USB connector as recited in claim 1 wherein a charging terminal unit (71) is mounted on the circuit board (60) for receiving and charging a NiH/NiCd battery.

3. The battery charger with a USB connector as recited in claim 1 wherein two charging terminal units (71) are mounted on the circuit board (60) for receiving and charging two NiH/NiCd batteries.

4. The battery charger with a USB connector as recited in claim 1 wherein a sliding cover (81) is arranged at the top of the charging chamber (70).

5. A battery charger with a USB connector, comprising:
a) a USB connector (50) connectable to a USB port for gaining the direct current from the USB port;
b) a circuit board (60) for controlling the charging process, the circuit board (60) having a front end for fixing connection legs (51) of the USB connector (50) in place to establish the electrical connection;
c) a charging terminal unit (71) consisting of a positive and a negative terminal (711) - (712) both of which are positioned side by side at the rear end of the circuit board (60), respectively; and
d) a housing (80) adapted to cover the circuit board (60) and fix the USB connector (50) in place, a charging chamber (70) being formed at the top of the housing (80) for receiving two charging batteries (20) such that the charging terminal unit (71) projects from the front end of the charging chamber (70) while an electrical connection piece projects from the rear end of thereof and is adapted to establish an electrical connection between two charging batteries (20) arranged side by side in opposite direction;
wherein the USB connector (50), the circuit board (60), and the charging chamber (70) are arranged in a linear and axial direction (X-X) and joined together to form a strip-shaped body.

6. The battery charger with a USB connector as recited in claim 5 wherein a charging chamber (70) is formed at the rear end of the housing (80) for receiving two charging batteries (20) such that the charging terminal unit (71) projects from the front end of the charging chamber (70) while an hinged cap is positioned at the rear end thereof, and wherein an electric connection piece (72) is disposed at the inner side of the cap for establishing an electrical connection between two charging batteries (20) arranged side by side in opposite direction.

7. A battery charger with a USB connector, comprising:
a) a USB connector (50) connectable to a USB port for gaining the direct current from the USB port;
b) a circuit board (60) for controlling the charging process, the circuit board (60) having a front end for fixing connection legs (51) of the USB connector (50) in place to establish the electrical connection;
c) a charging terminal unit (71) consisting of a positive and a negative terminal (711) - (712) both of which are positioned side by side at the rear end of the circuit board (60), respectively; and
d) a housing (80) including:
i) a front housing (80a) adapted to cover the circuit board (60) and fix the USB connector (50) in place, a mounting portion being formed at the rear end of the front housing (80a), (80b) ; and
ii) a rear housing (80b) having a closed rear end and an open front end to form an axial charging chamber (70), the front end of the rear housing (80b) fitting into the mounting portion (82) of the front housing (80a), an electric connection piece (72) being positioned at the inner side of the rear end of the rear housing (80b),
wherein the USB connector (50), the circuit board (60), and the charging chamber (70) are arranged in a linear and axial direction (X-X) and joined together to form a strip-shaped body.

8. The battery charger with a USB connector as recited in claim 7 wherein two charging batteries (20) arranged side by side in opposite direction are received within the rear housing (80b).

9. The battery charger with a USB connector as recited in claim 7 wherein one charging battery (20) is received within the rear housing (80b), and wherein the electric connection piece (72a) includes a contact portion (721) at the internal side of the rear end of the rear housing (80b) and a conductive portion (722) extending from the contact portion (721) to the opening of the rear housing (80b), and wherein the conductive portion (722) includes a free end (723) in contact with the negative terminal (712) when the front housing (80a) and the rear housing (80b) are joined together to form the whole housing (80) so that the charging current flows from the positive terminal (711) through the charging battery (20) and the electric connection piece (72a) back to the negative terminal (712), thereby creating a continuous charging loop.

10. The battery charger with a USB connector as recited in claim 7 wherein a top cover (90) is mounted on the USB connector (50).
